(19) Europäisches Patentamt
European Patent Office
Office européen des brevets

(11) **EP 4 663 265 A1**

(12) **EUROPEAN PATENT APPLICATION**
published in accordance with Art. 153(4) EPC

(43) Date of publication:
**17.12.2025 Bulletin 2025/51**

(21) Application number: **24846104.8**

(22) Date of filing: **17.05.2024**

(51) International Patent Classification (IPC):
**A63F 13/5378** (2014.01)   **G06F 3/04842** (2022.01)
**G06F 3/14** (2006.01)   **G06F 3/04845** (2022.01)
**H04W 4/80** (2018.01)   **G06V 10/48** (2022.01)
**G06V 10/25** (2022.01)

(52) Cooperative Patent Classification (CPC):
**A63F 13/5378; A63F 13/355; A63F 13/52;**
**G06T 3/40; G06V 10/25; G06V 10/44**

(86) International application number:
**PCT/KR2024/095813**

(87) International publication number:
**WO 2025/023804 (30.01.2025 Gazette 2025/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.07.2023 KR 20230095616**

(71) Applicant: **Samsung Electronics Co., Ltd.**
**Suwon-si, Gyeonggi-do 16677 (KR)**

(72) Inventors:
• **KIM, Beomjoon**
**Suwon-si Gyeonggi-do 16677 (KR)**
• **KIM, Jonghwan**
**Suwon-si Gyeonggi-do 16677 (KR)**
• **SEO, Guiwon**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND CONTROL METHOD THEREFOR**

(57)    An electronic device is disclosed. The electronic device comprises: a display; and one or more processors which identify, in a game image outputted through the display, one or more regions corresponding to one or more types of figures, identify, as candidate regions, one or more regions having a preset size or larger among the identified one or more regions, identify respective feature information of the identified one or more candidate regions on the basis of respective pixel information corresponding to the identified one or more candidate regions, and identify any one of the identified one or more candidate regions as a mini-map region on the basis of the identified feature information.

# FIG. 2

100

110    120

| DISPLAY | ←→ | PROCESSOR |

EP 4 663 265 A1

## Description

[Technical Field]

The disclosure relates to an electronic apparatus and a method for controlling thereof, and more particularly, to a method of detecting a mini-map that exists in a game image, adjusting the size and quality of the detected mini-map, and providing the same to a user.

[Background Art]

Various types of electronic devices have been developed and supplied in accordance with the development of electronic technology. Methods for effectively displaying a game screen are being researched as more users enjoy games. In particular, a method is emerging to effectively provide the user with a different type of information, such as a mini-map, an item, or a conversation history, within the game screen.

Technologies are being developed to display the mini-map on the same screen as the game screen or on a separate screen to help the user to play the game smoothly. In the related art, to enlarge or conveniently view the mini-map within the game screen, it has been uncomfortable for the user to be required to directly enlarge a mini-map region or directly browse the mini-map region in the game image by using an external device such as a remote control.

[Disclosure]

[Technical Solution]

According to an embodiment of the present disclosure, provided is an electronic apparatus including: a display; and at least one processor configured to identify at least one region corresponding to at least one type of figure in a game image output through the display.

The one or more processor is configured to identify at least one region of a predetermined size or more among the identified regions as a candidate region.

The one or more processor is configured to identify feature information each corresponding to the identified at least one candidate region based on pixel information each corresponding to the identified at least one candidate region.

The one or more processor is configured to identify any one of the identified at least one candidate region as a mini-map region based on the identified feature information.

According to an embodiment of the present disclosure, provided is a method for controlling an electronic apparatus, the method including: identifying at least one region corresponding to at least one type of figure in a game image output through a display.

The method includes identifying at least one region of a predetermined size or more among the identified regions as a candidate region.

The method includes identifying feature information each corresponding to the identified at least one candidate region based on pixel information each corresponding to the identified at least one candidate region.

The method includes identifying any one of the identified at least one candidate region as a mini-map region based on the identified feature information.

According to an embodiment of the present disclosure, provided is a non-transitory computer-readable recording medium which stores a computer instruction for causing an electronic apparatus to perform an operation in case of being executed by a processor of the electronic apparatus, wherein the operation includes identifying at least one region corresponding to at least one type of figure in a game image output through a display.

The operation includes identifying at least one region of a predetermined size or more among the identified regions as a candidate region.

The operation includes identifying feature information each corresponding to the identified at least one candidate region based on pixel information each corresponding to the identified at least one candidate region.

The operation includes identifying any one of the identified at least one candidate region as a mini-map region based on the identified feature information.

According to an embodiment of the present disclosure, provided is a non-transitory computer-readable recording medium which stores a computer instruction for causing an electronic apparatus to perform an operation in case of being executed by a processor of the electronic apparatus, wherein the operation includes identifying at least one region corresponding to at least one type of figure in a game image output by a display, identifying at least one candidate region having at least a predetermined size among the at least one region, identifying feature information corresponding to the at least one candidate region based on pixel information corresponding to the at least one candidate region and identifying at least one of the identified at least one candidate region as a mini-map region based on the identified feature information.

[Description of Drawings]

The above and other aspects, features, and advantages of certain embodiments of the present disclosure are more apparent from the following description taken in conjunction with the accompanying drawings, in which:

FIG. 1 is a view for explaining a method for controlling an electronic apparatus according to one or more embodiments;
FIG. 2 is a block diagram showing a configuration of the electronic apparatus according to one or more embodiments;
FIG. 3 is a view for explaining a method for controlling an electronic apparatus according to one or more embodiments;
FIG. 4 is a view showing a method of identifying a region corresponding to a figure according to one or more embodiments;
FIG. 5 is a view showing a method of identifying feature information according to one or more embodiments;
FIG. 6a is a flowchart explaining a method of adjusting a size of a mini-map region;
FIG. 6b is a view for explaining the method of adjusting a size of a mini-map region;
FIG. 7 is a view for explaining a method of displaying an image corresponding to the mini-map region according to one or more embodiments;
FIG. 8 is a view for explaining a method of displaying an image corresponding to the mini-map region according to one or more embodiments;
FIG. 9 is a view for explaining a method of updating the image corresponding to the mini-map region according to one or more embodiments;
FIG. 10 is a view for explaining a method of displaying a region of interest in the image corresponding to the mini-map region according to one or more embodiments; and
FIG. 11 is a block diagram showing a detailed configuration of the electronic apparatus according to one or more embodiments.

[Mode for Invention]

Hereinafter, example embodiments of the present disclosure are described in detail with reference to the accompanying drawings.
Terms used in the specification are briefly described, and the present disclosure is then described in detail.
General terms that are currently widely used are selected as terms used in embodiments of the present disclosure in consideration of their functions in the present disclosure, and may be changed based on the intentions of those skilled in the art or a judicial precedent, the emergence of a new technique, and the like. In addition, in a specific case, terms arbitrarily chosen by an applicant may exist. In this case, the meanings of such terms are mentioned in detail in corresponding description portions of the present disclosure. Therefore, the terms used in the present disclosure need to be defined on the basis of the meanings of the terms and the contents throughout the present disclosure rather than simple names of the terms.
In the specification, an expression "have", "may have", "include", "may include", or the like, indicates the existence of a corresponding feature (for example, a numerical value, a function, an operation or a component such as a part), and does not exclude the existence of an additional feature.
An expression, "at least one of A or B" may indicate "A", "B", or "both of A and B".
Expressions "first", "second", or the like, used in the present disclosure may indicate various components regardless of the sequence and/or importance of the components. These expressions are used only to distinguish one component from the other components, and do not limit the corresponding components.
In case that any component (for example, a first component) is mentioned to be "(operatively or communicatively) coupled with/to" or "connected to" another component (for example, a second component), it is to be understood that any component may be directly coupled to another component or may be coupled to another component through still another component (for example, a third component).
A term of a singular number used herein is intended to include its plural number unless explicitly indicated otherwise. It is to be understood that a term "include", "formed of", or the like specifies the presence of features, numerals, steps, operations, components, parts, or combinations thereof, mentioned in the specification, and does not preclude the presence or addition of one or more other features, numerals, steps, operations, components, parts, or combinations thereof.
In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module to be implemented by at least one processor except for a "module" or a "~er/or" that needs to be implemented by specific hardware.

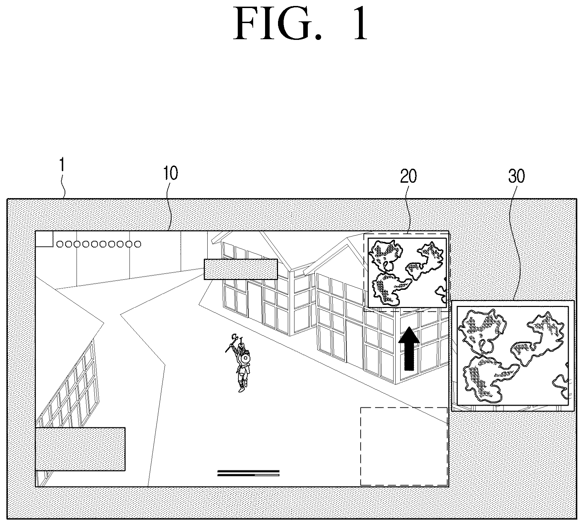

FIG. 1 is a view for explaining a method for controlling an electronic apparatus according to one or more embodiments.

Referring to FIG. 1, according to one or more embodiments, the electronic apparatus may provide a game image 10 to a user through a display 1. In one example, the electronic apparatus may identify a specific region 20 in the game image. The electronic apparatus may adjust a size of an image corresponding to the identified specific region 20, and display the game image 10 and a size-adjusted image 30 through the display 1.

The electronic apparatus may identify the specific region in the game image based on a user input. For example, the electronic apparatus may identify the specific region in the game image through a remote control device such as a remote control or a user interface included in the electronic apparatus. Accordingly, as shown in FIG. 1, a separate user input may be required for browsing a mini-map in the game image 10 in order for the user to enlarge and view a mini-map region in the game image. In addition, a size of the identified specific region 20 may be different from a size of the mini-map region, which may cause a problem that even a region around the mini-map is displayed in the size-adjusted image 30 while having an adjusted size together with the mini-map.

Hereinafter, various embodiments are described that may increase the user's convenience and improve immersion by detecting the mini-map in the game image without separate user input, adjusting the size of the detected mini-map, performing quality processing thereon, and providing the same to the user.

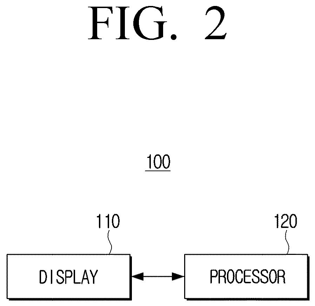

FIG. 2 is a block diagram showing a configuration of the electronic apparatus according to one or more embodiments.

Referring to FIG. 2, an electronic apparatus 100 may include a display 110 and at least one processor 120.

The electronic apparatus 100 may be implemented as various devices having a display, such as a smart television (TV), a tablet, a monitor, a smartphone, a desktop computer, a laptop computer, or the like according to one or more embodiments. The electronic apparatus 100 according to one or more embodiments is not limited to the above-described apparatus, and may be implemented as the electronic apparatus 100 having two or more functions of the above-described apparatuses.

The electronic apparatus 100 may communicate with an external device in various ways. According to one or more embodiments, communication modules for communication with the external device may be identically implemented. For example, the electronic apparatus 100 may communicate with the external device by using a Bluetooth module.

The display 110 may be implemented as a display including a self-light emitting element or a display including a non self-light emitting element and a backlight. For example, the display 110 may be implemented in various types of displays such as a liquid crystal display (LCD), an organic light emitting diode (OLED) display, a light emitting diode (LED) display, a micro light emitting diode (micro LED) display, a mini LED display, a plasma display panel (PDP), a quantum dot (QD) display, or a quantum dot light-emitting diode (QLED) display. The display 110 may also include a driving circuit, a backlight unit and the like, which may be implemented in a form such as an a-si thin film transistor (TFT), a low temperature poly silicon (LTPS) TFT, or an organic TFT (OTFT). The display 110 may be implemented as a touch screen combined with a touch sensor, a flexible display, a rollable display, a three-dimensional (3D) display, a display in which a plurality of display modules are physically connected with each other, or the like. The processor 120 may control the display 110 to output an output image acquired according to the various embodiments described above. Here, the output image may be a high-resolution image of 4K, 8K or higher. The output image may be a game image according to one or more embodiments.

The electronic apparatus 100 may be connected to an external display device, and may transmit the image or a content stored in the electronic apparatus 100 to the external display device. In detail, the electronic apparatus 100 may transmit the image or the content to the external display device together with a control signal for controlling the image or the content to be displayed on the external display device.

Here, the external display device may be connected to the electronic apparatus 100 through a communication interface 130 or an input/output interface. For example, the electronic apparatus 100 may not include the display like a set top box (STB). In addition, the electronic apparatus 100 may include only a small display which may only display simple information such as text information. Here, the electronic apparatus 100 may transmit the image or the content to the external display device in the wired or wireless manner through the communication interface 130, and transmit the image or the content to the external display device through the input/output interface.

At least one processor 120 (hereinafter, the processor) may be electrically connected to the display 110 and control overall operations of the electronic apparatus 100. The processor 120 may be at least one processor. In detail, the processor 120 may perform the operation of the electronic apparatus 100 according to the various embodiments of the present disclosure by executing at least one instruction stored in a memory.

The processor 120 according to one or more embodiments may be implemented as a digital signal processor (DSP) that processes a digital image signal, a microprocessor, a graphics processing unit (GPU), an artificial intelligence (AI) processor, a neural processing unit (NPU), or a time controller (TCON). However, the processor 120 is not limited thereto, and may include at least one of a central processing unit (CPU), a micro controller unit (MCU), a micro processing unit (MPU), a controller, an application processor (AP), a communication processor (CP) or an advanced RISC machine (ARM) processor, or may be defined by these terms. In addition, the processor 120 may be implemented in a system-on-chip (SoC) or a large scale integration (LSI) in which a processing algorithm is embedded, or may be implemented in a form of an application specific integrated circuit (ASIC) or a field programmable gate array (FPGA).

The processor 120 according to one or more embodiments may identify a region corresponding to at least one type of figure in the game image. The type of figure may include at least one of a square type, a circular type, or an oval type in one example. In one example, the processor 120 may identify at least one region corresponding to at least one type of figure in the game image displayed through the display 110. For example, the processor 120 may identify at least one type of figure in the game image through a predetermined algorithm, and identify the region corresponding to the identified figure. The processor 120 may identify the region corresponding to the figure in the game image by using Hough transform for example. Hough transform may be a feature extraction algorithm used in fields of image analysis, computer vision, and digital image processing. However, the present disclosure is not limited thereto, and the processor 120 may identify the region corresponding to the figure in the game image through the feature extraction algorithm other than Hough transform.

The processor 120 according to one or more embodiments may identify a candidate region among the regions corresponding to the identified at least one type of figure. In one example, in case of identifying at least one region corresponding to the figure, the processor 120 may identify at least one region of a predetermined size or more among the identified regions as the candidate region. The game image may include at least one of an item image, an image corresponding to a character's ability, a conversation history image, or a mini-map image, and here, a mini-map of a predetermined size or more may exist due to the user's visual characteristics. The processor 120 may identify at least one candidate region through, for example, Equation 1 and Equation 2 below.

[Equation 1]

$$Map_i = 1, \text{if} \left( \left( \left( \frac{FP_i}{TP} \right) \times 100 \right) \geq Thres \right), \text{for } i \in [1, N]$$

[Equation 2]

$$Map_i = 0, \text{if} \left( \left( \left( \frac{FP_i}{TP} \right) \times 100 \right) < Thres \right), \text{for } i \in [1, N]$$

Here, Map represents a value indicating whether a corresponding region is identified as the candidate region, and $Map_i$ represents a value indicating whether an i-th region corresponding to the figure is identified as the candidate region. If $Map_i$ is 1, the processor 120 may identify the i-th region corresponding to at least one type of figure as the candidate region. $FP_i$ represents the number of pixels included in the i-th region corresponding to the figure, and TP represents a total number of pixels included in the game image. Thres represents a predetermined size value. N represents N regions corresponding to the figure in the game image.

The processor 120 according to one or more embodiments may identify feature information of the identified candidate region. The feature information represents a feature value for determining whether the candidate region corresponds to the mini-map. In one example, the processor 120 may identify feature information each corresponding to the identified at least one candidate region based on pixel information each corresponding to the identified at least one candidate region. In one example, the pixel information may include at least one of position information or color information corresponding to each of a plurality of pixels included in the candidate region.

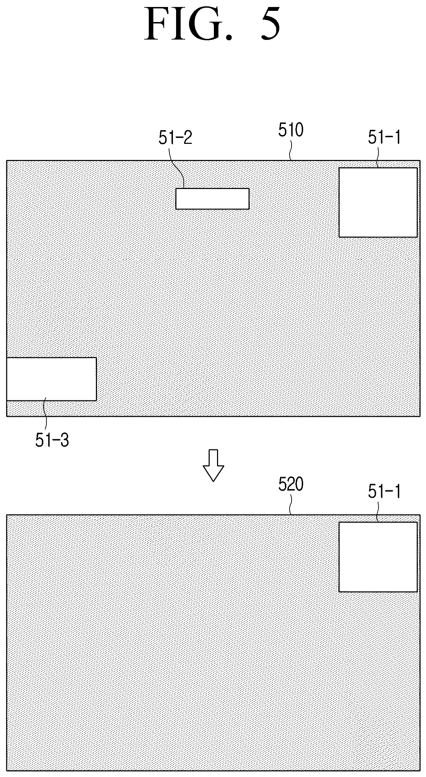

In one example, the processor 120 may identify the feature information of the candidate region based on at least one of a color variance value corresponding to the pixel included in the candidate region, a ratio of an edge pixel in the identified candidate region, or a distance between the candidate region and a vertex in the game image. The description describes a detailed method of identifying the feature information with reference to FIG. 5.

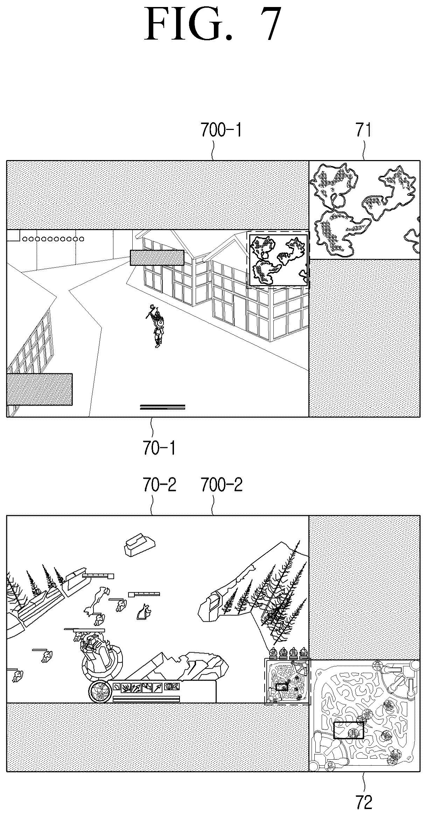

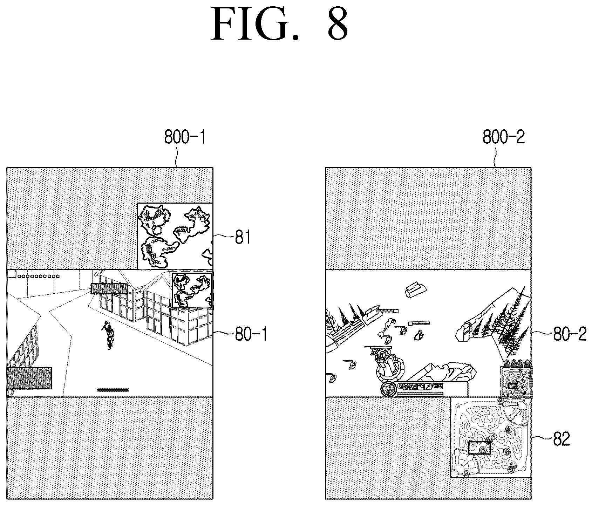

The processor 120 according to one or more embodiments may identify any one of the identified at least one candidate region as a mini-map region based on the identified feature information. In one example, in case of identifying the plurality of candidate regions, the processor 120 may identify, as the mini-map region, the candidate region corresponding to the feature information having the maximum value among the feature information corresponding to the identified candidate regions. However, the present disclosure is not limited thereto, and in one example, the processor 120 may identify, as the mini-map region, the candidate region having the feature information of a predetermined value or more. Its details are described with reference to FIGS. 7 and 8.

According to one or more embodiments, in case of identifying the mini-map region in the game image, the processor 120 may provide the user with an image corresponding to the identified mini-map region. In one example, the processor 120 may transmit the image corresponding to the identified mini-map region to the external device including the display 110 through the communication interface. The external device that receives an image corresponding to the mini-map region may provide the mini-map to the user through the display 110. Its details are described with reference to FIGS.

6a and 6b.

Alternatively, in one example, the processor 120 may provide each of the image corresponding to the mini-map region and the game image through the display 110. Its details are described with reference to FIGS. 7 and 8.

In the above-described example, the electronic apparatus 100 may detect the mini-map in the game image even without any separate user input and provide the same to the user. The electronic apparatus 100 may provide the mini-map together with the game image, or may transmit information on the mini-map to the external device for the mini-map to be provided through the separate display 110. It is thus possible to increase the user's convenience and improve immersion.

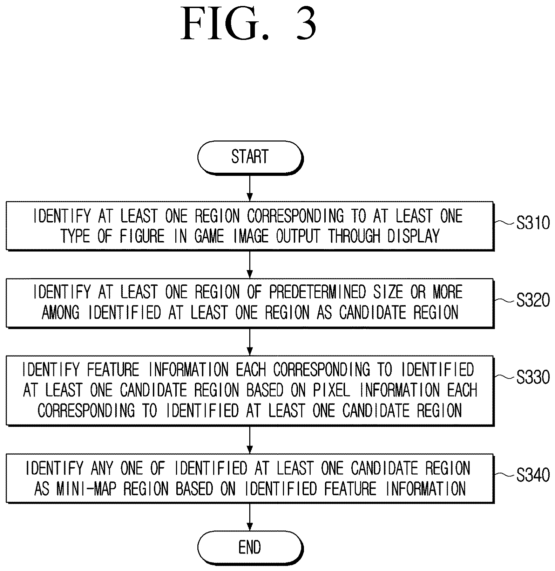

FIG. 3 is a view for explaining a method for controlling an electronic apparatus according to one or more embodiments.

Referring to FIG. 3, in the controlling method according to one or more embodiments, at least one region corresponding to at least one type of figure may be first identified in the game image output through the display 110 (S310). In one example, the processor 120 may identify at least one region corresponding to the figure in the game image by using the predetermined algorithm (e.g., Hough transform).

Next, in the controlling method according to one or more embodiments, at least one region of the predetermined size or more among the identified at least one region may be identified as the candidate region (S320). In one example, in case of identifying at least one region corresponding to the figure in the game image, the processor 120 may identify at least one region of the predetermined size or more among the identified regions as the candidate region.

Next, in the controlling method according to one or more embodiments, the feature information each corresponding to the identified at least one candidate region may be identified based on the pixel information each corresponding to the identified at least one candidate region (S330). In one example, the processor 120 may acquire the pixel information each corresponding to at least one candidate region identified based on the game image. The processor 120 may identify the feature information each corresponding to at least one candidate region based on the acquired pixel information. For example, the processor 120 may identify the feature information of the candidate region based on at least one of the color variance value corresponding to the pixel included in the candidate region, the ratio of the edge pixel in the identified candidate region, or the distance between the candidate region and the vertex in the game image.

Next, in the controlling method according to one or more embodiments, any one of the identified at least one candidate region may be identified as the mini-map region based on the identified feature information (S340).

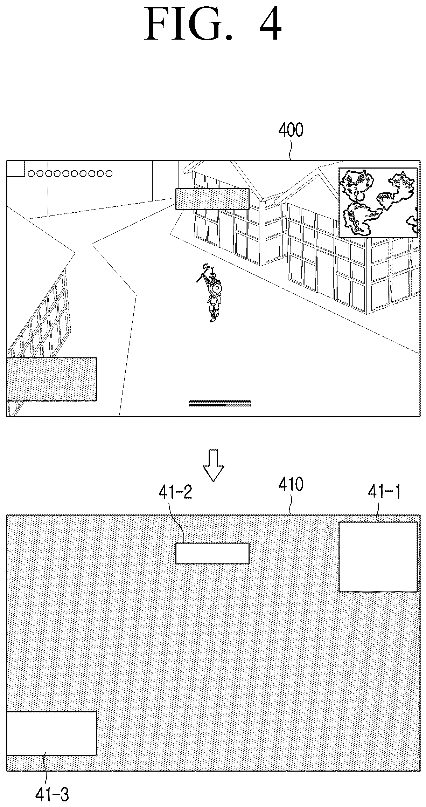

FIG. 4 is a view showing a method of identifying the region corresponding to the figure according to one or more embodiments.

The processor 120 according to one or more embodiments may identify the region corresponding to at least one type of figure that exists in the game image. In one example, referring to FIG. 4, the processor 120 may identify at least one region of the square type that exists in a game image 400 output through the display 110. For example, the processor 120 may identify a plurality of square-type regions (41-1, 41-2, and 41-3 by using the predetermined algorithm (e.g., Hough transform). That is, as shown in a drawing 410 on a right side of FIG. 4, the processor 120 may identify the plurality of square-type regions 41-1 to 41-3 in the game image.

The processor 120 according to one or more embodiments may identify the region corresponding to the figure based on a region within a predetermined range in the game image. In one example, the processor 120 may identify at least one region corresponding to at least one type of figure in a region beyond a predetermined pixel distance from a center point of the game image. The center point of the game image represents a pixel corresponding to the center point of the game image. The processor 120 may not identify existence of the region corresponding to the figure for a region within the predetermined pixel distance from the center point of the game image. In general, the mini-map in the game image may exist to be relatively far from the center point in the game image (for example, adjacent to the vertex of the game image). Therefore, the processor 120 may identify the region corresponding to the figure while only targeting the region beyond the predetermined pixel distance from the center point of the game image, and may reduce data consumption and a time required for the identification.

FIG. 5 is a view showing a method of identifying feature information according to one or more embodiments.

According to one or more embodiments, the processor may identify the feature information each corresponding to the identified at least one candidate region based on the pixel information corresponding to at least one pixel included in the identified at least one candidate region. In one example, the pixel information may include size information of each color (e.g., red, green, or blue color) corresponding to the pixel and the position information of the pixel in the image.

In one example, the processor may identify the feature information based on at least one of the color variance value corresponding to at least one pixel included in the identified candidate region, the ratio of the edge pixel in the identified candidate region, or the distance between the candidate region and the vertex in the game image. For example, the processor may identify the feature information of the candidate region by using at least one of Equation 3, Equation 4, Equation 5, or Equation 6 below.

[Equation 3]

$$MF_C = w_{CD}*(CD_{max}-CD_C)+w_{CV}*CV_C+w_{EP}*EP_C, w_{CD}+w_{CV}+w_{EP}=1$$

In Equation 3, an index C represents any one region (or a C-th candidate region) among at least one region selected as the candidate region. Feature information MF for identifying the mini-map may be identified based on a distance CD between the candidate region and the vertex in the game image, a color variance value CV, or an edge pixel ratio EP.

$CD_{max}$ represents the maximum value of a distance between the vertices in the game image. For example, in case that the game image is a rectangular-type image, a size of the distance between the two vertices that has the largest pixel distance may be $CD_{max}$. $w_{CD}$ represents a weight value corresponding to the color variance value, $w_{CV}$ represents a weight value corresponding to the distance between the candidate region and the vertex in the game image, and $w_{EP}$ represents a weight value corresponding to the ratio of the edge pixel. In one example, the weight value may be pre-stored in the memory, and may be changed based on the user input. For example, the weight values stored in the memory may be $w_{CD}=0.5$, $w_{CV}=0.3$, and $w_{EP}=0.2$, respectively, and are not limited thereto.

The distance between the candidate region and the vertex in the game image represents the minimum value of pixel distances between at least one vertex existing in the game image among the pixels included in the candidate region. That is, the distance between the candidate region and the vertex in the game image represents the pixel distance between a pixel corresponding to the vertex closest to the candidate region and a pixel closest to the vertex in the candidate region. In one example, the distance between the candidate region and the vertex in the game image may be identified using Equation 4 below.

[Equation 4]

$$CD_c = (|x_c - x_{corner}| + |y_c - y_{corner}|)*k_{CD}$$

Here, $CD_c$ represents a C-th distance between the candidate region and the vertex in the game image. $x_c$ represents an x-coordinate value of the pixel closest to the vertex among the pixels in the C-th candidate region. $y_c$ represents a y-coordinate value of the pixel closest to the vertex among the pixels in the C-th candidate region. $x_{corner}$ is an x-coordinate value of the pixel corresponding to the vertex existing in the game image, and $y_{corner}$ represents a y-coordinate value of the pixel corresponding to the vertex existing in the game image. $k_{CD}$ represents a normalization factor. In one example, in case that there are the plurality of vertices in the game image, the processor may identify the distance between the candidate region and the vertex in the game image for each of the plurality of vertices by using Equation 4, and identify the distance having the minimum value among the identified distances as the distance between the candidate region and the vertex in the game image.

In one example, the processor may identify the color variance value corresponding to at least one pixel included in the identified candidate region by using Equation 5 below.

[Equation 5]

$$CV_c = (\frac{1}{M}\sum_{j=1}^{M}(x_j-\mu_{co})^2)_c*k_{CV}, co=(R,G,B)$$

Here, $CV_c$ represents the color variance value of the pixel included in the C-th candidate region. M represents a total number of pixels included in the C-th candidate region. $x_j$ is the sum of the red, green, and blue color values of a j-th pixel included in the C-th candidate region. $\mu_{co}$ is the sum of respective average values of the red, green, and blue color values corresponding to all the pixels included in the C-th candidate region. $k_{CV}$ represents the normalization factor. For example, $\mu_{co}$ is the sum of a first average value of the red color values corresponding to all pixels included in the C-th candidate region, a second average value of the green color values corresponding to all the pixels included in the C-th candidate region, and a third average value of the blue color values corresponding to all the pixels included in the C-th candidate region.

In one example, the processor may identify the ratio of the edge pixel in the candidate region by using Equation 6 below.

[Equation 6]

$$EP_c = \left( \frac{n(edge)_c}{M} \right) * k_{EP}$$

Here, $EP_c$ represents the ratio of the edge pixel corresponding to the C-th candidate region. Here, an edge (alternatively, borderline or outline) represents a pixel having a value (for example, the color value) in the image that is rapidly changed from a pixel value of a pixel adjacent thereto. Here, $n(edge)_c$ represents the number of pixels detected as the edge pixel in the C-th candidate region. M represents the total number of pixels included in the C-th candidate region. $k_{EP}$ represents the normalization factor.

In one example, the processor may detect the edge pixel in the candidate region by using the predetermined algorithm. For example, the processor may detect the edge pixel in the candidate region by using Canny Edge algorithm. The Canny Edge algorithm may be an algorithm for detecting the edge included in the image, and include a step of removing noise by using blurring, a step of detecting the intensity and direction of pixel gradient, a non-maximum suppression step, and a step of determining the edge by using a hysteresis threshold. In one example, the Canny Edge algorithm may be pre-stored in the memory. However, the present disclosure is not limited thereto, and the processor may detect the edge by using an edge detection algorithm other than the Canny Edge algorithm.

Referring to FIG. 5, the processor according to one or more embodiments may identify any of at least one candidate region as the mini-map region based on the feature information each corresponding to at least one candidate region.

In one example, assume that a plurality of the candidate regions 51-1, 51-2, and 51-3 are identified as shown in an upper drawing 510 of FIG. 5. In case of identifying the plurality of the candidate regions 51-1 to 51-3, the processor may identify the feature information each corresponding to the plurality of candidate regions 51-1 to 51-3 by using the pixel information each corresponding to the identified plurality of candidate regions 51-1 to 51-3. For example, the processor may identify the feature information of the candidate region by using at least one of Equation 3, Equation 4, Equation 5, or Equation 6.

In one example, as shown in a right drawing 520 of FIG. 5, in case of identifying the feature information each corresponding to the plurality of the candidate regions 51-1 to 51-3, the processor may compare the respective identified feature information with each other and identify, as the mini-map region, the candidate region 51-1 corresponding to the feature information having the maximum value.

According to one or more embodiments, the processor may identify, as the mini-map region, the candidate region corresponding to the feature information having the maximum value among the feature information each corresponding to the identified at least one candidate region. In one example, in case of identifying the plurality of the candidate regions in the game image, the processor may identify the feature information each corresponding to the plurality of candidate regions based on the pixel information each corresponding to the identified plurality of candidate regions, and identify, as the mini-map region, the candidate region corresponding to the feature information where the identified feature information has a relatively largest size. However, the present disclosure is not limited thereto. In one example, the processor may identify, as the mini-map region, at least one candidate region corresponding to the feature information where the identified feature information has a size of the predetermined value or more. That is, the plurality of mini-map regions may exist.

According to one or more embodiments, in case of identifying the candidate region having the maximum feature information, the processor may identify whether the feature information corresponding to any one of the identified candidate regions has the predetermined value or more. In one example, in case of identifying the feature information as being less than the predetermined value, the processor may identify that the mini-map region does not exist in the game image.

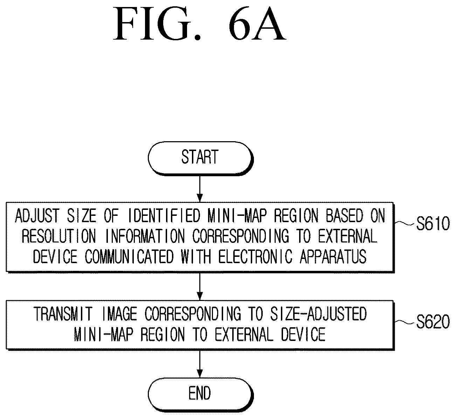

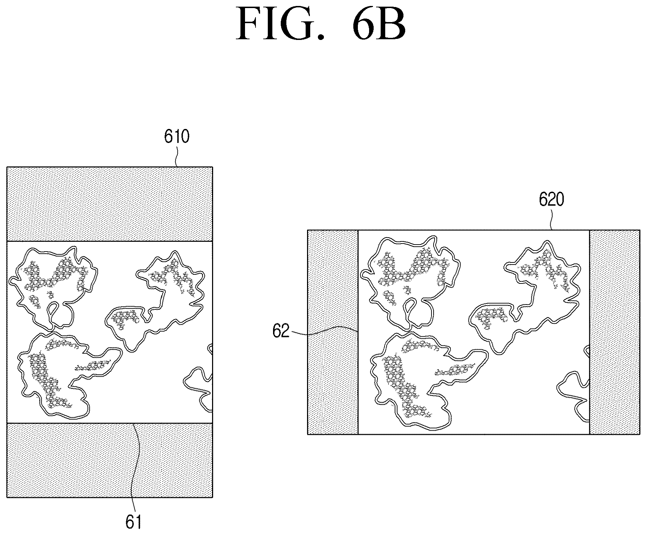

FIGS. 6a and 6b are views for explaining a method of adjusting the size of the mini-map region.

Referring to FIG 6a, in the controlling method according to one or more embodiments, the size of the identified mini-map region may be adjusted based on the resolution information corresponding to the external device communicated with the electronic apparatus 100 (S610). In one example, the external device may be implemented as a different type of electronic apparatus including the display. For example, the external device may be implemented as a variety of devices having the display, such as a smart TV, a tablet, a monitor, a smartphone, a desktop computer, or a laptop computer. The resolution information corresponding to the external device represents the number of pixels which may be displayed through the display included in the external device (for example, the number of pixels corresponding to a horizontal length of the display or the number of pixels corresponding to a vertical length of the display).

In one example, the processor 120 may acquire the resolution information corresponding to the external device communicated with the electronic apparatus 100. For example, the processor 120 may acquire the resolution information from the external device or an external server through the communication interface. Alternatively, for example, the resolution information each corresponding to a plurality of devices including the external device may be pre-stored in the memory, and the processor 120 may acquire the resolution information of the external device communicated with the electronic apparatus 100 from the information stored in the memory.

In one example, in case of acquiring the resolution information, the processor 120 may adjust a size of the image corresponding to the mini-map region based thereon. For example, in case that at least one of the horizontal length (or the number of pixels corresponding to the horizontal length) or the vertical length (or the number of pixels corresponding to the vertical length) of the identified mini-map region is greater than a resolution (or the number of pixels corresponding to the horizontal length of the display or the number of pixels corresponding to the vertical length of the display) of the external device, the processor 120 may adjust the size of the image corresponding to the mini-map region to correspond to the number of pixels corresponding to a smaller value of the horizontal or vertical length of the display included in the external device based on the resolution information of the external device. In this case, the size of the image may be adjusted while maintaining an aspect ratio of the mini-map region.

Alternatively, for example, in case that at least one of the horizontal or vertical length of the identified mini-map region is smaller than the resolution of the external device, the processor 120 may adjust the size of the image corresponding to the mini-map region to correspond to the number of pixels corresponding to the smaller value of the horizontal or vertical length of the display included in the external device based on the resolution information of the external device. In this case, the size of the image may be adjusted while maintaining the aspect ratio of the mini-map region.

Referring to FIG 6b, the processor 120 according to one or more embodiments may adjust the size of the identified mini-map region based on the resolution information corresponding to the external device communicated with the electronic apparatus.

In one example, as shown in a left drawing of FIG. 6b, in case of identifying that a horizontal length of a display 610 of the external device is smaller, the processor 120 may adjust a size of an image 61 corresponding to the mini-map region to correspond to the number of pixels corresponding to the horizontal length of the display 610 included in the external device based on the resolution information of the external device. For example, in case that the horizontal length of the identified mini-map region is greater than the number of pixels corresponding to the horizontal length of the display 610 of the external device, the processor 120 may reduce the size of the image 61 corresponding to the mini-map region to correspond to the number of pixels corresponding to the horizontal length of the display 610 included in the external device.

Alternatively, for example, in case that the horizontal length of the identified mini-map region is less than the number of pixels corresponding to the horizontal length of the display 610 of the external device, the processor 120 may enlarge the size of the image 61 corresponding to the mini-map region to correspond to the number of pixels corresponding to the horizontal length of the display 610 included in the external device. In this case, the image 61 may be reduced or enlarged while maintaining the aspect ratio of the mini-map region.

In one example, as shown in a right drawing of FIG. 6b, in case of identifying that a vertical length of a display 620 of the external device is smaller, the processor 120 may adjust a size of an image 62 corresponding to the mini-map region to correspond to the number of pixels corresponding to the vertical length of the display 620 included in the external device based on the resolution information of the external device. For example, in case that the vertical length of the identified mini-map region is greater than the number of pixels corresponding to the horizontal length of the display 620 of the external device, the processor 120 may reduce the size of the image 62 corresponding to the mini-map region to correspond to the number of pixels corresponding to the horizontal length of the display 620 included in the external device.

Alternatively, for example, in case that the vertical length of the identified mini-map region is less than the number of pixels corresponding to the vertical length of the display 620 of the external device, the processor 120 may enlarge the size of the image 62 corresponding to the mini-map region to correspond to the number of pixels corresponding to the vertical length of the display 620 included in the external device. In this case, the image 62 may be reduced or enlarged while maintaining the aspect ratio of the mini-map region.

Next, in the controlling method according to one or more embodiments, the size-adjusted image corresponding to the mini-map region may be transmitted to the external device (S620).

In the above-described example, in case of identifying the mini-map region, the electronic apparatus 100 may transmit the image corresponding to the identified mini-map region to the external device, and the mini-map image may be provided to the user from the external device. Accordingly, the user may receive the mini-map through the separate display, which may improve user satisfaction. However, the present disclosure is not limited thereto, and according to one or more embodiments, the size-adjusted mini-map may be displayed together with the game image through the display 110. Its details are described with reference to FIGS. 7 and 8.

FIG. 7 is a view for explaining a method of displaying the image corresponding to the mini-map region according to one or more embodiments.

The processor 120 according to one or more embodiments may control the display for the size-adjusted image corresponding to the mini-map region to be displayed in a predetermined region of the display. In one example, the processor 120 may adjust a size of the game image to a predetermined first size and adjust the size of the image corresponding to the mini-map region to a predetermined second size in case of identifying the mini-map region. The first size and second size may be values pre-stored in the memory during an initial setup, and are not limited thereto. In one example, the processor 120 may re-identify the first size and the second size based on the user input for changing the first size and the second size.

In one example, the processor 120 may control the display for the size-adjusted game image to be displayed in a first region of the display and the size-adjusted image corresponding to the mini-map region to be displayed in a second region of the display. In one example, the second region may be a region adjacent to the mini-map region among the regions of the display excluding the first region.

For example, according to a left drawing of FIG. 7, in case of first identifying the mini-map region, the processor 120 may adjust the size of the game image to the predetermined first size, and adjust the size of the image corresponding to the mini-map region to the predetermined second size, thereby identifying an adjusted game image 70-1 and an image 71 corresponding to the adjusted mini-map region. The processor 120 may control the display for the size-adjusted game image to be displayed in a first region of a display 700-1 and the size-adjusted image corresponding to the mini-map region to be displayed in a second region of the display 700-1. As shown in the left drawing of FIG. 7, in case that the mini-map in the game image is disposed at an upper right of the display 700-1, the second region may be the upper right of the display 700-1.

Alternatively, for example, according to a right drawing of FIG. 7, the processor 120 may first identify an adjusted game image 70-2 and an image 72 corresponding to the adjusted mini-map region. The processor 120 may control the display for the size-adjusted game image to be displayed in a first region of a display 700-2 and the size-adjusted image corresponding to the mini-map region to be displayed in a second region of the display 700-2. As shown in the right drawing of FIG. 7, in case that the mini-map in the game image is disposed at a lower right of the display 700-2, the second region may be the lower right of the display 700-2.

FIG. 8 is a view for explaining a method of displaying the image corresponding to the mini-map region according to one or more embodiments.

Referring to FIG. 8, the processor 120 according to one or more embodiments may control the display for the size-adjusted image corresponding to the mini-map region to be displayed in a predetermined region of the display. In one example, in case of identifying the mini-map region, the processor 120 may adjust the size of the game image to a predetermined first size and adjust the size of the image corresponding to the mini-map region to a predetermined second size.

In one example, the processor 120 may adjust the size of the game image to the predetermined first size and the size of the image corresponding to the mini-map region to the predetermined second size based on the resolution information of the display 110. For example, in case that the vertical length of the display is relatively large compared to its horizontal length, the processor 120 may adjust the size of the game image and the size of the image corresponding to the mini-map region as shown in FIG. 8.

For example, according to a left drawing of FIG. 8, the processor 120 may adjust the size of the game image to the predetermined first size and the size of the image corresponding to the mini-map region to the predetermined second size based on resolution information of a display 800-1, thereby identifying an adjusted game image 80-1 and an image 81 corresponding to the adjusted mini-map region. The processor 120 may control the display for the size-adjusted game image to be displayed in a first region of a display 800-1 and the size-adjusted image corresponding to the mini-map region to be displayed in a second region of the display 800-1. In case that the mini-map in the game image is disposed at an upper right of the display 800-1, the second region may be the upper right of the display 800-1.

Alternatively, for example, according to a right drawing of FIG. 8, the processor 120 may first identify an adjusted game image 80-2 and an image 82 corresponding to the adjusted mini-map region. The processor 120 may control the display for the size-adjusted game image to be displayed in a first region of a display 800-2 and the size-adjusted image corresponding to the mini-map region to be displayed in a second region of the display 800-2. As shown in the right drawing of FIG. 8, in case that the mini-map in the game image is disposed at a lower right of the display 800-2, the second region may be the lower right of the display 800-2.

Returning to FIG. 2, the processor 120 according to one or more embodiments may control the display 110 to display the images corresponding to the plurality of mini-map regions.

In one example, the processor 120 may adjust a size of an image corresponding to a first mini-map region among the plurality of mini-map regions to the predetermined second size, and adjust a size of an image corresponding to a second mini-map region among the plurality of mini-map regions to a predetermined third size in case of identifying the plurality of mini-map regions based on the identified feature information.

For example, in case of identifying a first candidate region and a second candidate region that have the feature information of the predetermined value or more among the identified plurality of candidate regions, the processor 120 may identify the first candidate region and the second candidate region respectively as the first mini-map region and the second mini-map region. The processor 120 may adjust the size of the image corresponding to the first mini-map region among the plurality of mini-map regions to the predetermined second size, and adjust the size of the image corresponding to the second mini-map region to the predetermined third size. In one example, information on the second size and third size may be pre-stored in the memory.

In one example, the processor 120 may control the display 110 for a size-adjusted image corresponding to the first mini-map region to be displayed in a second region of the display 110, and a size-adjusted corresponding to the second mini-map region to be displayed in a third region of the display 110. In one example, the third region may be a region adjacent to the second mini-map region among regions of the display 110 excluding the first and second regions.

For example, the first mini-map region may be disposed at an upper left of the game image, and the second mini-map region may be disposed at the upper right of the game image. In this case, the second region may be a region disposed relatively at an upper left of the regions of the display 110 excluding the first region, and the third region may be a region disposed relatively at an upper right of the regions of the display 110 excluding the first and second regions.

The processor 120 according to one or more embodiments may control the display 110 for a predetermined image to be displayed in a remaining region of the mini-map region excluding the first and second regions of the display 110.

In one example, the processor 120 may control the display 110 for a region other than the regions where the game image 70-1 and the image 71 corresponding to the mini-map region are displayed among the regions of the display 700-1 to be colored in a predetermined color (e.g., to be displayed in black) as shown in the left drawing of FIG. 7. Alternatively, in one example, the processor 120 may control the display 110 for a predetermined pattern (e.g., checkered pattern or striped pattern) to be displayed in the remaining region of the mini-map region excluding the first and second regions. Alternatively, in one example, the processor 120 may control the display 110 for the image related to the game (for example, a replay screen image, the image related to the item, or the image including the conversation history) to be displayed in the remaining region.

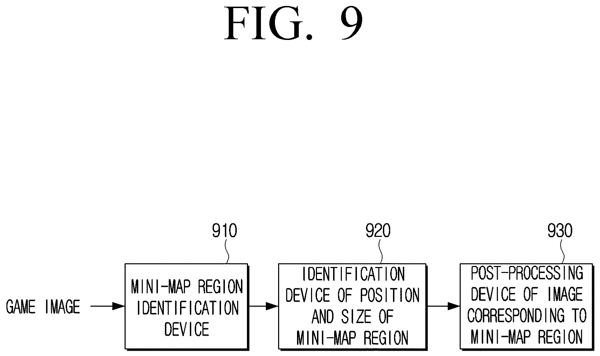

FIG. 9 is a view for explaining a method of updating the image corresponding to the mini-map region according to one or more embodiments.

Referring to FIG. 9, the processor 120 according to one or more embodiments may identify the mini-map region in the game image by using a mini-map region identification device 910. In case of identifying the mini-map region, the processor 120 may identify the position for displaying the image corresponding to the mini-map region and the size of the image by using an identification device 920 of the position and size of the identified mini-map region. In one example, in case that the image corresponding to the mini-map region is displayed through the external device, the processor 120 may adjust the size of the mini-map region based on the resolution information corresponding to the display of the external device and the size information of the mini-map region (at least one of the horizontal or vertical length of the mini-map region). Alternatively, in one example, in case that the image corresponding to the mini-map region is displayed together with the game image through the display 110, the processor 120 may identify the position and size of the mini-map region in the display 110 based on the resolution information of the display 110, the relative position of the mini-map region in the game image, and the information stored in the memory.

The processor according to one or more embodiments may update the image corresponding to the mini-map region by using a post-processing device 930 of the image corresponding to the mini-map region. In one example, the memory may store the predetermined algorithm for improving the image quality. The processor may identify an image in which at least one of the sharpness or contrast ratio of the size-adjusted image corresponding to the mini-map region is improved based on the information stored in the memory.

For example, the processor may update the image corresponding to the mini-map region by using the quality improvement algorithm stored in the memory in case that the size of the image corresponding to the mini-map region is adjusted. In case of identifying the image having the updated quality, the processor may transmit the updated image to the external device through the communication interface. Alternatively, the processor may control the display 110 for the updated image to be displayed together with the game image. The processor may improve the sharpness or contrast ratio of the image by using the post-processing device 930, and also reducing side effects such as sharpness deterioration and jagging which may occur in case of adjusting the size of the mini-map region.

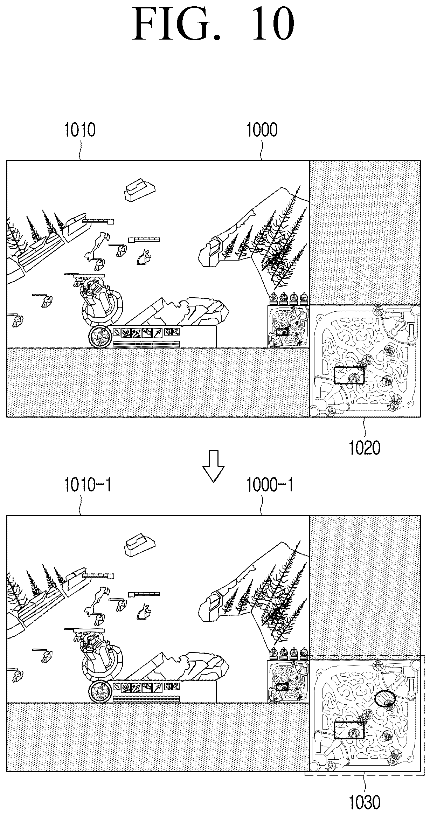

FIG. 10 is a view for explaining a method of displaying a region of interest in the image corresponding to the mini-map region according to one or more embodiments.

The processor 120 according to one or more embodiments may identify the region of interest in the image corresponding to the mini-map region. In one example, the processor 120 may identify the region of interest in the game image by using the predetermined algorithm. For example, in case that a new unit is added to the game image, the processor 120 may identify a region where the new unit is added as the region of interest. In case of identifying that the newly added region is included in the mini-map region, the processor 120 may identify that the region of interest exists in the image corresponding to the mini-map region.

The processor 120 according to one or more embodiments may update the image corresponding to the mini-map region for the identified region of interest to be distinguished from the remaining region of the mini-map region excluding the region of interest in case of identifying the region of interest in the image corresponding to the mini-map region.

Referring to FIG. 10, according to one or more embodiments, in case that the new unit is added to the game image, the processor 120 may identify whether the region where the new unit is added is included in the mini-map region. In case that the region where the new unit is added is included in the mini-map region, the processor 120 may identify the region where the new unit is added as the region of interest. The processor 120 may identify an image in which the region of interest is shaded with a predetermined color and display the same through the display for the identified region of interest to be distinguished from the remaining region of the mini-map region excluding the region of interest.

For example, assume that a game image 1010 and an image 1020 corresponding to the mini-map are displayed on a display 1000, as shown in a left drawing of FIG. 10. In case that the new unit is added to the game image while the game image is being output in real time, the processor 120 may identify an image 1030 in which the region of interest is shaded with the predetermined color, as shown in a right drawing of FIG. 10 for the identified region of interest to be distinguished from the remaining region of the mini-map region excluding the region of interest. The processor 120 may control a display 1000-1 for the identified image 1030 to be displayed on the display 1000-1 together with a game image 1010-1.

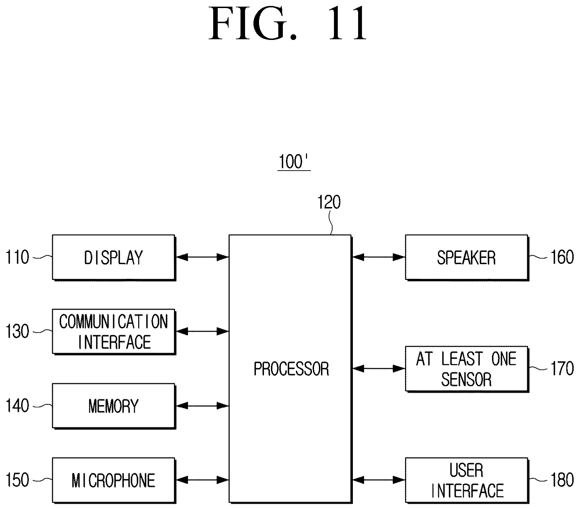

FIG. 11 is a block diagram showing a detailed configuration of the electronic apparatus according to one or more embodiments.

Referring to FIG. 11, an electronic apparatus 100' may include the display 110, at least one processor 120, the communication interface 130, a memory 140, a microphone 150, a speaker 160, at least one sensor 170, and a user interface 180. The description omits detailed descriptions of components overlapping the components shown in FIG. 2 among the components shown in FIG. 11.

The communication interface 130 may input and output various types of data. For example, the communication interface 130 may receive and transmit the various types of data with the external device (e.g., source device), an external storage medium (e.g., universal serial bus (USB) memory), the external server (e.g., web hard), or the like by using a communication method such as an access point (AP)-based Wi-Fi, for example, wireless local area network (LAN), a Bluetooth, a Zigbee, a wired/wireless LAN, a wide area network (WAN), Ethernet, an IEEE 1394, a high definition multimedia interface (HDMI), a USB, a mobile high-definition link (MHL), an audio engineering society/European broadcasting union (AES/EBU) communication, an optical communication, or a coaxial communication.

In one example, the communication interface 130 may include a Bluetooth low energy (BLE) module. BLE represents Bluetooth technology for enabling the transmission and reception of low-power and low-capacity data in a frequency band of 2.4 GHz that has a reach of approximately 10 m. However, the communication interface 130 is not limited thereto, and may include a Wi-Fi communication module. That is, the communication interface 130 may include at least one of the Bluetooth low energy (BLE) module or the Wi-Fi communication module.

The memory 140 may store data necessary for various embodiments. The memory 140 may be implemented in the form of a memory embedded in the electronic apparatus 100' or in the form of a memory detachable from the electronic apparatus 100', based on a data storage purpose. For example, data for driving the electronic apparatus 100' may be stored in the memory embedded in the electronic apparatus 100', and data for an extended function of the electronic apparatus 100' may be stored in the memory detachable from the electronic apparatus 100.

The memory embedded in the electronic apparatus 100 may be implemented as at least one of a volatile memory (for example, a dynamic random access memory (DRAM), a static RAM (SRAM), or a synchronous dynamic RAM (SDRAM)), or a non-volatile memory (for example, an one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash or a NOR flash), a hard drive, or a solid state drive (SSD)). In addition, the memory detachable from the electronic apparatus 100' may be implemented in the form of a memory card (for example, a compact flash (CF), a secure digital (SD), a micro secure digital (Micro-SD), a mini secure digital (Mini-SD), an extreme digital (xD), or a multi-media card (MMC)), or an external memory which may be connected to a USB port (for example, the USB memory).

The microphone 150 may represent a module acquiring a sound and convert the same to an electrical signal, and may be a condenser microphone, a ribbon microphone, a moving coil microphone, a piezoelectric element microphone, or a carbon microphone, or a micro electro mechanical system (MEMS) microphone. In addition, the microphone may be implemented using a non-directional method, a bi-directional method, a uni-directional method, a sub-cardioid method, a super-cardioid method, or a hyper-cardioid method.

The speaker 160 may include a tweeter for high-pitched sound reproduction, a midrange for mid-range sound reproduction, a woofer for low-pitched sound reproduction, a subwoofer for extremely low-pitched sound reproduction, an enclosure for controlling resonance, a crossover network that divides a frequency of the electrical signal input to the speaker for each band, or the like.

The speaker 160 may output an audio signal to the outside of the electronic apparatus 100'. The speaker 160 may output multimedia reproduction, recording reproduction, various notification sounds, a voice message, or the like. The electronic apparatus 100' may include an audio output device such as the speaker 160, or an output device such as an audio output terminal. In particular, the speaker 160 may provide acquired information, processed/produced information based on the acquired information, a response result to the user voice, an operation result to the user voice, or the like, in the form of a voice.

At least one the sensor 170 (hereinafter referred to as the sensor) may include the plurality of sensors of various types. The sensor 170 may measure a physical quantity or detect an operation state of the electronic apparatus 100', and convert the measured or detected information to the electrical signal. The sensor 170 may include a camera, and the camera may include a lens that focuses visible light and other optical signals received based on being reflected by an object to an image sensor, and the image sensor which may detect visible light and other optical signals. Here, the image sensor may include a two-dimensional (2D) pixel array divided into a plurality of pixels. Alternatively, at least one sensor 170 may include a temperature sensor or an infrared sensor.

The user interface 180 is a component for the electronic apparatus 100' to perform interaction with the user. For example, the user interface 180 may include at least one of the touch sensor, a motion sensor, a button, a jog dial, a switch, the microphone, or the speaker, and is not limited thereto.

In the above-described example, the electronic apparatus 100 may detect the mini-map in the game image even without any separate the user input and provide the same to the user. The electronic apparatus 100 may provide the mini-map together with the game image, or may transmit the information on the mini-map to the external device for the mini-map to be provided through the separate display 110. It is thus possible to increase the user's convenience and improve immersion.

The methods according to the various embodiments of the present disclosure described above may be implemented in the form of an application which may be installed in an electronic apparatus. Alternatively or additionally, the methods according to the various embodiments of the present disclosure described above may be performed using a deep learning-based trained neural network (or deep-learning neural network), for example, the learning network model. Alternatively or additionally, the methods according to the various embodiments of the present disclosure described above may be implemented only by software upgrade or hardware upgrade of the electronic apparatus. Alternatively or additionally, the various embodiments of the present disclosure described above may be performed through an embedded server disposed in the electronic apparatus, or a server disposed outside the electronic apparatus.

According to one or more embodiments, the various embodiments described above may be implemented in software including an instruction stored in a machine-readable storage medium (for example, a computer-readable storage medium). A machine may be an apparatus that invokes the stored instruction from the storage medium and may be operated based on the invoked instruction, and may include the display device (for example, a display device A) according to the disclosed embodiments. In case that the instruction is executed by the processor, the processor may perform a function corresponding to the instruction directly or by using other components under control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to one or more embodiments, the method according to the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore™). In case of the online distribution, at least a part of the computer program product may be at least temporarily stored in the storage medium such as a memory included in a server of a manufacturer, a server of an application store or a relay server, or be temporarily provided.

In addition, each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although specific embodiments are shown and described above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.


**Claims**

1. An electronic apparatus comprising:

    a display;
    at least one memory storing at least one instruction; and

at least one processor configured to execute the at least one instruction to:

identify at least one region corresponding to at least one type of figure in a game image output through the display,
identify at least one candidate region having at least a predetermined size among the at least one region,
identify feature information corresponding to the at least one candidate region based on pixel information corresponding to the at least one candidate region, and
identify one of the at least one candidate region as a mini-map region based on the feature information.

2. The apparatus as claimed in claim 1, further comprising a communication interface,
wherein the at least one processor is further configured to execute the at least one instruction to:

adjust a size of the mini-map region based on resolution information corresponding to an external device communicably linked with the electronic apparatus, and
transmit an image corresponding to the size-adjusted mini-map region to the external device via the communication interface.

3. The apparatus as claimed in claim 2, wherein the at least one memory stores a predetermined algorithm for improving an image quality, and
wherein the at least one processor is further configured to execute the at least one instruction to:

based on the size of the at least one mini-map region being adjusted, update the image corresponding to the mini-map region based on information stored in the at least one memory, and
transmit the updated image to the external device via the communication interface.

4. The apparatus as claimed in claim 1, wherein the at least one processor is further configured to execute the at least one instruction to:

based on the at least one mini-map region being identified, adjust a size of the game image to a first size and adjust a size of an image corresponding to the mini-map region to a second size, and
control the display to display the size-adjusted game image in a first region of the display and the size-adjusted image corresponding to the mini-map region in a second region of the display, and
wherein the second region is a region adjacent to the mini-map region among a plurality of regions of the display excluding the first region.

5. The apparatus as claimed in claim 4, wherein the at least one processor is further configured to execute the at least one instruction to:

identify a plurality of mini-map regions based on the feature information,
based on identifying the plurality of mini-map regions, adjust a size of a first image corresponding to a first mini-map region among the plurality of mini-map regions to the second size and adjust a size of a second image corresponding to a second mini-map region among the plurality of mini-map regions to a third size, and
control the display to display the size-adjusted first image in the second region of the display and the size-adjusted second image in a third region of the display, and
wherein the third region is a region adjacent to the second mini-map region among the plurality of regions of the display excluding the first region and the second region.

6. The apparatus as claimed in claim 4, wherein the at least one processor is further configured to execute the at least one instruction to control the display to display a predetermined image in a remaining region of the mini-map region excluding the first region and the second region.

7. The apparatus as claimed in claim 1, wherein the at least one processor is further configured to execute the at least one instruction to:

identify a region of interest in an image corresponding to the mini-map region, and
based on identifying the region of interest, update the image corresponding to the mini-map region such that the region of interest is distinguished from a remaining region of the mini-map region excluding the region of interest.

8. The apparatus as claimed in claim 1, wherein the at least one processor is further configured to execute the at least one instruction to identify at least one region corresponding to the at least one type of figure in a region beyond a predetermined pixel distance from a center point of the game image.

9. The apparatus as claimed in claim 1, wherein the at least one processor is further configured to execute the at least one instruction to identify the feature information based on at least one of a color variance value corresponding to at least one pixel in the at least one candidate region, a ratio of an edge pixel in the at least one candidate region, or a distance between the at least one candidate region and at least one vertex in the game image, and wherein the distance between the at least one candidate region and the at least one vertex is a minimum value of a distance between a first pixel in the at least one candidate region and a second pixel corresponding to the at least one vertex in the game image.

10. The apparatus as claimed in claim 9, wherein the at least one processor is further configured to execute the at least one instruction to identify, as the at least one mini-map region, a candidate region of the at least one candidate region having feature information with a maximum value among the feature information corresponding to the at least one candidate region.

11. A method for controlling an electronic apparatus, the method comprising:

identifying at least one region corresponding to at least one type of figure in a game image output by a display;
identifying at least one candidate region having at least a predetermined size among the at least one region;
identifying feature information corresponding to the at least one candidate region based on pixel information corresponding to the at least one candidate region; and
identifying at least one of the identified at least one candidate region as a mini-map region based on the identified feature information.

12. The method as claimed in claim 11, further comprising:

adjusting a size of the identified at least one mini-map region based on resolution information corresponding to an external device communicably linked with the electronic apparatus; and
transmitting an image corresponding to the size-adjusted mini-map region to the external device

13. The method as claimed in claim 12, wherein the transmitting the image comprises:

based on the size of the at least one mini-map region being adjusted, updating the image based on information stored in a memory; and
transmitting the updated image to the external device.

14. The method as claimed in claim 11, further comprising:

based on the at least one mini-map region being identified, adjusting a size of the game image to a first size and adjusting a size of an image corresponding to the at least one mini-map region to a second size; and
displaying the size-adjusted game image in a first region of the display and displaying the size-adjusted image corresponding to the mini-map region in a second region of the display,
wherein the second region is a region adjacent to the at least one mini-map region among a plurality of regions of the display excluding the first region.

15. The method as claimed in claim 14, further comprising identifying a plurality of mini-map regions based on the identified feature information,

wherein the adjusting the size of the image corresponding to the at least one mini-map region to the second size comprises, based on the plurality of mini-map regions being identified, adjusting a size of a first image corresponding to a first mini-map region among the plurality of mini-map regions to the second size and adjusting a size of a second image corresponding to a second mini-map region among the plurality of mini-map regions to a third size,
wherein the displaying the size-adjusted image comprises displaying the size-adjusted first image in the second region of the display and displaying the size-adjusted second image in a third region of the display, and
wherein the third region is a region adjacent to the second mini-map region among the plurality of regions of the display excluding the region and the second region.

# FIG. 1

# FIG. 2

<u>100</u>

110

120

| DISPLAY | ←→ | PROCESSOR |

# FIG. 3

```
┌─────────┐
│  START  │
└─────────┘
     │
     ▼
┌──────────────────────────────────────────────────────────┐
│  IDENTIFY AT LEAST ONE REGION CORRESPONDING TO AT LEAST ONE │ ~S310
│   TYPE OF FIGURE IN GAME IMAGE OUTPUT THROUGH DISPLAY       │
└──────────────────────────────────────────────────────────┘
     │
     ▼
┌──────────────────────────────────────────────────────────┐
│  IDENTIFY AT LEAST ONE REGION OF PREDETERMINED SIZE OR MORE │ ~S320
│   AMONG IDENTIFIED AT LEAST ONE REGION AS CANDIDATE REGION  │
└──────────────────────────────────────────────────────────┘
     │
     ▼
┌──────────────────────────────────────────────────────────┐
│  IDENTIFY FEATURE INFORMATION EACH CORRESPONDING TO IDENTIFIED │ ~S330
│  AT LEAST ONE CANDIDATE REGION BASED ON PIXEL INFORMATION EACH │
│   CORRESPONDING TO IDENTIFIED AT LEAST ONE CANDIDATE REGION    │
└──────────────────────────────────────────────────────────┘
     │
     ▼
┌──────────────────────────────────────────────────────────┐
│  IDENTIFY ANY ONE OF IDENTIFIED AT LEAST ONE CANDIDATE REGION │ ~S340
│   AS MINI-MAP REGION BASED ON IDENTIFIED FEATURE INFORMATION  │
└──────────────────────────────────────────────────────────┘
     │
     ▼
┌─────────┐
│   END   │
└─────────┘
```

# FIG. 4

400

41-2    410    41-1

41-3

# FIG. 5

# FIG. 6A

START

ADJUST SIZE OF IDENTIFIED MINI-MAP REGION BASED ON RESOLUTION INFORMATION CORRESPONDING TO EXTERNAL DEVICE COMMUNICATED WITH ELECTRONIC APPARATUS — S610

TRANSMIT IMAGE CORRESPONDING TO SIZE-ADJUSTED MINI-MAP REGION TO EXTERNAL DEVICE — S620

END

# FIG. 6B

# FIG. 7

# FIG. 8

# FIG.  9

```
                        910              920              930
                         (                (                (

GAME IMAGE ──▶  ┌──────────────┐  ┌──────────────┐  ┌──────────────┐
                │ MINI-MAP REGION│  │ IDENTIFICATION │  │ POST-PROCESSING│
                │ IDENTIFICATION │─▶│DEVICE OF POSITION│─▶│ DEVICE OF IMAGE│
                │    DEVICE     │  │   AND SIZE OF   │  │ CORRESPONDING TO│
                │              │  │ MINI-MAP REGION │  │ MINI-MAP REGION │
                └──────────────┘  └──────────────┘  └──────────────┘
```

# FIG. 10

# FIG. 11

## INTERNATIONAL SEARCH REPORT

| | International application No. |
|---|---|
| | **PCT/KR2024/095813** |

### A. CLASSIFICATION OF SUBJECT MATTER

**A63F 13/5378**(2014.01)i; **G06F 3/04842**(2022.01)i; **G06F 3/14**(2006.01)i; **G06F 3/04845**(2022.01)i; **H04W 4/80**(2018.01)i; **G06V 10/48**(2022.01)i; **G06V 10/25**(2022.01)i

According to International Patent Classification (IPC) or to both national classification and IPC

### B. FIELDS SEARCHED

Minimum documentation searched (classification system followed by classification symbols)

A63F 13/5378(2014.01); A63F 13/52(2014.01); A63F 13/80(2014.01); A63F 13/86(2014.01); G06Q 50/10(2012.01); G06T 17/05(2011.01); H04N 21/431(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 게임(game), 디스플레이(display), 미니맵(mini map), 식별(identification)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0034064 A (SAMSUNG ELECTRONICS CO., LTD.) 09 March 2023 (2023-03-09)<br>See paragraphs [0001]-[0306]; claims 1-20; and figures 1-25. | 1-15 |
| A | KR 10-2207712 B1 (NCSOFT CORPORATION) 26 January 2021 (2021-01-26)<br>See claims 1-18. | 1-15 |
| A | JP 2023-068353 A (GREE INC.) 17 May 2023 (2023-05-17)<br>See claims 1-21. | 1-15 |
| A | KR 10-2011-0116782 A (NEXON CORPORATION) 26 October 2011 (2011-10-26)<br>See claims 1-26. | 1-15 |
| A | JP 2023-088034 A (KONAMI DIGITAL ENTERTAINMENT CO., LTD.) 26 June 2023 (2023-06-26)<br>See claims 1-11. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 August 2024** | **27 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/095813**

| Patent document cited in search report | | | Publication date (day/month/year) | Patent family member(s) | | | Publication date (day/month/year) |
|---|---|---|---|---|---|---|---|
| KR | 10-2023-0034064 | A | 09 March 2023 | CN | 117941361 | A | 26 April 2024 |
| | | | | EP | 4358527 | A1 | 24 April 2024 |
| | | | | US | 2023-0100652 | A1 | 30 March 2023 |
| | | | | WO | 2023-033587 | A1 | 09 March 2023 |
| KR | 10-2207712 | B1 | 26 January 2021 | None | | | |
| JP | 2023-068353 | A | 17 May 2023 | JP | 2023-133336 | A | 22 September 2023 |
| | | | | JP | 7319635 | B2 | 02 August 2023 |
| | | | | US | 2023-0134965 | A1 | 04 May 2023 |
| KR | 10-2011-0116782 | A | 26 October 2011 | KR | 10-1139498 | B1 | 02 May 2012 |
| JP | 2023-088034 | A | 26 June 2023 | None | | | |

Form PCT/ISA/210 (patent family annex) (July 2022)